# EUROPEAN PATENT SPECIFICATION

(11) **EP 3 978 812 B1**
(45) Date of publication and mention of the grant of the patent: **05.08.2026**
(21) Application number: 21209786.9
(22) Date of filing: 27.12.2019
(51) Int. Cl.: F24C 15/20, B01D 45/08, B01D 45/06, B01D 45/16

(54) **KITCHEN HOOD FILTER**
ABZUGSHAUBENFILTER
FILTRE DE HOTTE DE CUISINE

(30) Priority: 04.01.2019 PL 12794319 U
(43) Date of publication of application: 06.04.2022
(62) Divisional of application: 19219839.8
(73) Proprietor: Stalgast Radom Sp. z o.o., 04-175 Warsaw (PL)
(72) Inventor: FROM, Konrad, 02-942 Warsaw (PL)
(74) Representative: Piotrowicz, Alicja

(56) References cited:
- EP-A1- 3 195 916
- WO-A1-88/04952
- WO-A2-03/015895
- US-A- 3 945 812
- US-A- 4 877 430
- US-A1- 2015 328 566

## Description

The subject-matter of this invention is a kitchen hood filter designed to evacuate and purify air and to filter solid and liquidparticles from air.

The solutions known to date include modular chamber filters with centrifugal air movement made of metal profiles arranged in one plane.

The US patent description number US4872892 entitled "Air purifier" discloses a modular solution which comprises plurality of modules operating according to centrifugal separation, each module comprising at least one vortex chamber. Gas entering the vortex chamber is set into helical motion therewithin, so that the gas flows through the vortex chamber in one direction, substantially perpendicular to a direction in which the incoming gas is introduced into the module.

Another US patent description number US20070023349 entitled "High efficiency grease filter cartridge" discloses a solution which has a filtering section configured so that fumes enter a main chamber thereof and flow through a grease removing filter therewithin in a direction parallel to the main chamber.

Yet another, international patent description number WO2006074425 discloses a device for improving performance while retaining the benefits of displacement ventilation without the use of independent air conditioning systems.

Significant for the subject solution is an earlier utility model application number W.127740 relating to a kitchen hood filter that also has a series of longitudinal chambers with a quadrilateral profile, and a meandering air flow. Each of the filter chambers has a slotted intake channel formed between the side wall and a side surface of a blade parallel to it. The blade is a longitudinal slat which is angled at an intake opening of the slotted intake channel, thereby expanding the said opening. Opposite to the slotted intake channel, in each chamber an outlet slotted channel is formed between the side wall and a side surface of a blade parallel to it. The blade is a longitudinal slat which is angled at a certain distance from an outlet opening of the slotted outlet channel, thereby expanding said slotted outlet channel inside the chamber.Thetwo side walls are fitted with handles facing in opposite directions.

A significant document illustrating the state of the art in hood filters is the US invention US2015/328566. The solution presents a kitchen hood filter with a series of longitudinal chambers and a meandering air flow, with mounted handles facing in opposite directions, wherein each chamber has an intake slotted duct formed between the side wall of the slat and the side surface of the slat parallel thereto, wherein in each chamber, opposite the intake slotted duct, an outlet slotted duct is formed between the side wall and the side surface of the slat parallel thereto. Each slat is longitudinal and is angled at the intake opening of the intake slotted duct, thereby expanding the said opening.

In turn, from the specification of the European invention EP2363190A1, there is known a kitchen hood filter comprising a housing inside which there are mounted a number of profiles that form chambers, through which the air flows, wherein the individual profiles have members that are bent to form elongated areas of air flow, wherein the arms of the individual profiles form at least two circulation chambers and, in the direction of air intake and air outlet, the arms of the individual profiles form an intake slotted duct and an outlet slotted duct, wherein the arms in the outlet slotted duct form a labyrinthine passage.

From yet another international solution WO03015895A2, a gas filter is known, the internal structure of which is an assembly of overlapping elongated stepped baffles with slat-like protrusions. The baffles are arranged in series next to each other and mounted in the frame to prevent the gas flow in a straight line.

In turn, the international invention WO2007096731A1 discloses a filter comprising two arrays of profiled longitudinal intermediate slats and a micro-stretched filter placed between said series of intermediate slats. The slats have a U-shape cross-section and are arranged opposite to each other, so that their edges form air flow ducts.

On the other hand, from the European invention EP0206204 a fluid separator is known, having first and second section parts arranged in rows. The parts are open in cross section and are trough-shaped with overlapping edges. Each part of the section has an internal protrusion extending in its longitudinal direction, wherein the protrusion causes increased turbulence and hence cleaning of fluids flowing through the parts of the section. The cross-sectional parts can be detachably retained in the handle to allow for easy cleaning.

The US patent description number US4877430 discloses a separator for gaseous fluids comprising first section parts and second section parts, each of said parts being open and trough-shaped in cross section, said first parts being arranged in a first row, said second parts being arranged in a second row opposite said first row, each of said parts having free longitudinal edges, said edges of said first parts overlapping and spaced apart from said edges of said second parts said first or second section, parts being detachable from a support.

From the international solution WO0137972A2, however, a modular filter device for exhaust and/or filtering hoods is known, which forms a suction chamber with the inside of the hood, the labyrinthine ducts of which have a zigzag shape.

Worth noting is the American document US3945812A, the solution of which is based on a series of baffles for directing the exhaust stream along a tortuous path as it passes through the filter, thus removing condensed grease and oils, depositing them on the inner surfaces of the filter by means of a centrifugal force and a ram action.

In general, the state of the art reveals some solutions that employ filters with labyrinthine profile to purify air from cooking fumes. Air filtration in a labyrinth filter uses a labyrinthine shape in order to slow down the air flow almost to zero and to change the direction of the flow. Heavier particles deposit on the filter walls. In case of this type of filter, it is also not possible to increase the flow rate without further consequences. In order to operate at the filter maximum efficiency, at a high fluid flow rate one has to increase the time during which the particles are subjected to external forces. Such type of devices is made of stainless steel, which allows a long lifetime and easy maintenance. They are mainly used to filter out greasy fumes, oil mist. However, with such devices, the degree of filtration was not sufficient.

Another type of air purification kitchens filters are devices that use a cyclone effect, which is a centrifugal force based filtration. Air/liquid particles are set in rotational motion and subjected to the centrifugal force. Heavier particles present in the air (suspension) deposit on the chamber walls. Theoretically, the higher the velocity, the higher the centrifugal force and the more efficient the filtration. Unfortunately, the increase of the velocity causes some physical phenomena associated with the high flow, which adversely affects the filtration and other aspects related to air flow (e.g. noise).

Yet another type of filters used in kitchen ventilation, and not only, are labyrinth filters. This type of filter is less efficient than a combination of a cyclone filter and a labyrinth filter.

On the market there are also present mesh filters, which can be used together with labyrinth or cyclone filters. Mesh filters capturing grease are a major fire hazard. An unclean mesh filter burns like a torch when ignited and is very difficult to extinguish. Some countries have banned the use of such filters in professional restaurants and catering services.

Filter used according to state of the art do not provide a sufficient degree of filtration of the purified air, so the fraction of the unfiltered air with grease particles remains in the filtered room. In air filtration devices, especially in the field of kitchen equipment, it is a crucial issue to eliminate solid particles and liquid particles containing grease particles from air. In order to meet the expectations of the users, the Applicants have set for themselves the task of developing such filter which would have a construction allowing a higher efficiency than the known solutions.

The aim of the solution according to the present invention is to develop a new construction of a high performance kitchen hood filter for kitchen ventilation systems for restaurants and catering services.

The term "blade" used in the description refers to an "arm" of a profile and has the same designation in the drawings. The term "slat" means an element of which individual profiles are made out.

According to the present invention, the kitchen hood filter with a series of longitudinal chambers with a quadrilateral profile, and with a meandering air flow, with mounted handles facing in opposite directions, wherein each chamber has an intake slotted duct formed between the outer surface of the side wall of one longer profile having a shape resembling a rotated "S" letter and the parallel to it outer side surface of the first arm of another longer profile having a shape resembling a rotated "S" letter, with individual profiles are arranged in rows formed of overlapping, successive profiles, wherein the first arm of the longer profile having a shape resembling a rotated "S" letter is a longitudinal slat which is angularly bent at the intake opening of the intake slotted duct, thereby expanding the intake opening on the side of the housing surface, and wherein in each chamber, opposite to the intake slotted duct, an outlet slotted duct is formed between the inside side wall of another longer profile having a shape resembling a rotated "S" letter and a parallel to it outer side surface of the second arm of one longer profile having a shape resembling a rotated "S" letter. The characteristic feature if the filter is that the second arm of one longer profile having a shape resembling a rotated "S", together with a shorter profile having a shape resembling "U" letter connected to the longer profile, forms a slanted T-bar, one of the arms of the slanted T-bar is inclined towards the opening of the outlet slotted duct and towards the angularly bent offset first arm of the shorter profile having a shape resembling "U" letter, bent away from the side wall of adjacent another longer profile having a shape resembling a rotated "S" letter, wherein the other shorter profile having a shape resembling "U" letter has varying heights of the arms, which bent ends of the two adjacent other shorter profiles having a shape resembling "U" letter form an elongated intermediate labyrinthine outlet slotted duct of air outlet.

Preferably, the slant of the T-bar ranges from 65° to 130° and it corresponds to the angularly bent offset arm of the shorter profile having a shape resembling "U" letter.

Due to its design and features, the kitchen hood filter according to the invention is applicable in professional kitchen hoods.

The kitchen hood filter according to the invention provides an effective removal of kitchen fumes and an effective separation of grease present in kitchens and restaurants.

The subject-matter of the invention is disclosed in the attached drawing which presents:

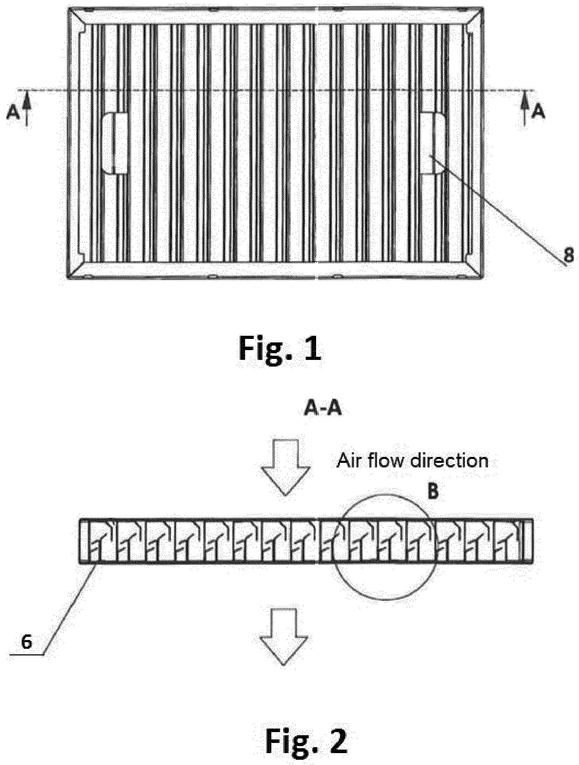

Fig. 1 a view from below of a first embodiment of the kitchen hood filter according to the present invention,
Fig. 2 cross-profile A-A of Fig. 1 of the first embodiment of the kitchen hood filter,

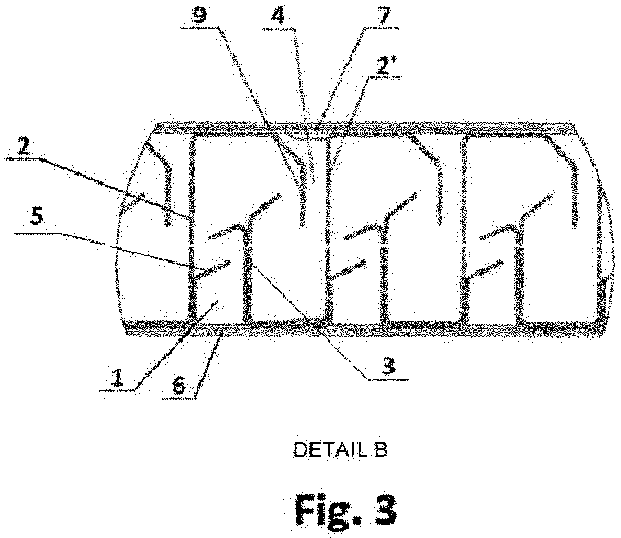

Fig. 3 detail B of Fig. 2 of the first embodiment of the kitchen hood filter,

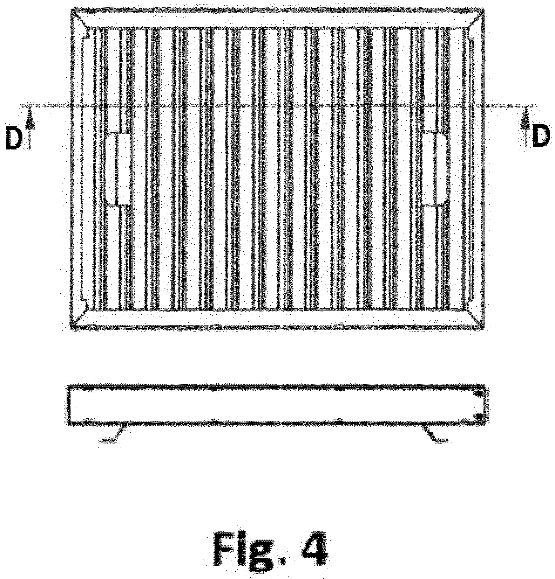

Fig. 4. a view from below of a second embodiment of the kitchen hood filter not forming part of the present invention,

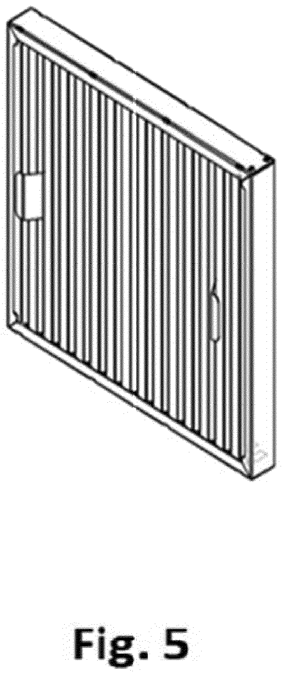

Fig. 5 a perspective view of the second embodiment of the kitchen hood filter,
Fig. 6 a schematic view in cross-profile of the kitchen hood filter showing the shapes of the individual profiles,
Fig. 7 detail C of Fig. 6 of the second embodiment of the kitchen hood filter,
Fig. 8 a perspective view of a professional kitchen hood comprising the kitchen hood filter according to the invention,
Fig. 9 a perspective view of another projection of a professional kitchen exhaust hood comprising the kitchen hood filter according to the invention,
Fig. 10 a diagram showing the degree of filtration in percentages as a function of particle size of the solution from the state of the art as compared with the solution according to the present invention.

Reducing the amount of grease particles in the kitchen air improves both hygienic conditions and fire safety in kitchens.

The Applicants have made a comparison of their solution with one of the existing market solutions of the Halton company . The test was conducted in the laboratory of DMT GmbH & Co. KG in Essen in accordance with German VDI2052-1 regulations.

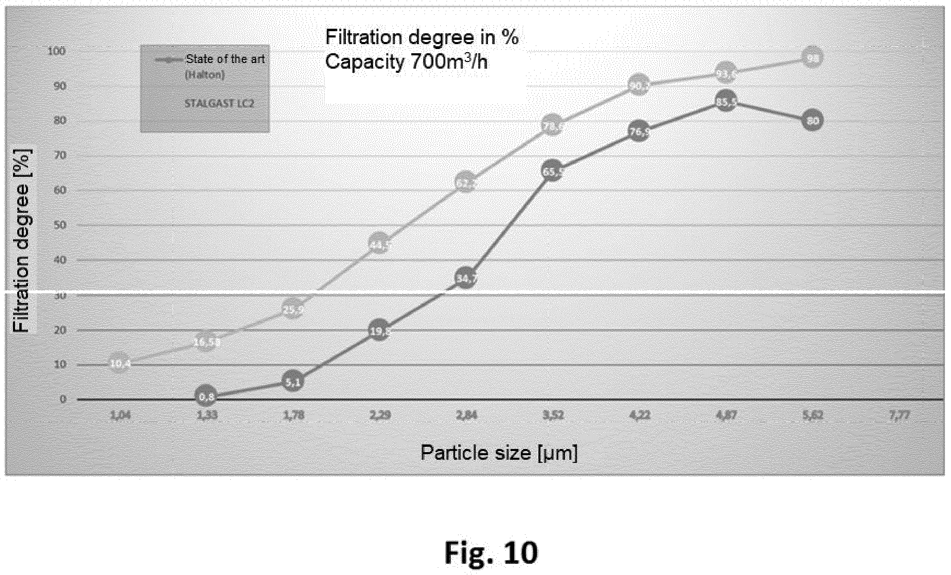

The results of the conducted analysis were presented in the attached Fig.10. The tests confirmed higher effectiveness of the solution according to the present invention in relation to the prior art filter. It results from the above that the shape of the kitchen hood filter according to the invention led to achieve air purification in kitchens close to 98% degree of filtration. This result was obtained for particles up to 10 µm at an air flow rate of 700 m³/ h for a 500mm x 500mm filter. As it can be seen in the schematic diagram presenting data for the whole particle size range, the filtration degree obtained by using the Applicants' solution is higher and reaches up to 98% for particle size of about 5.62 µm.

The combination of air filtration using of labyrinth filter elements and filtration using the centrifugal effect on a small area resulted in very high air filtration efficiency on a relatively small area.

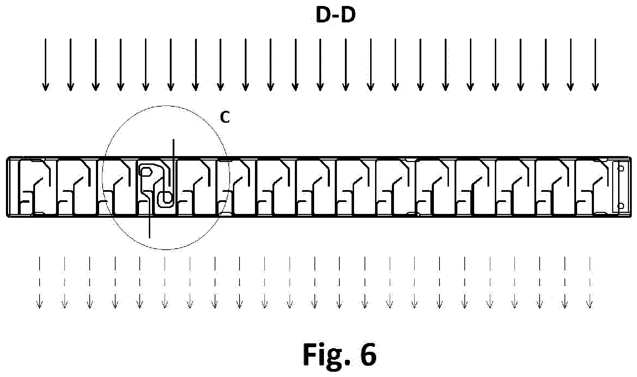

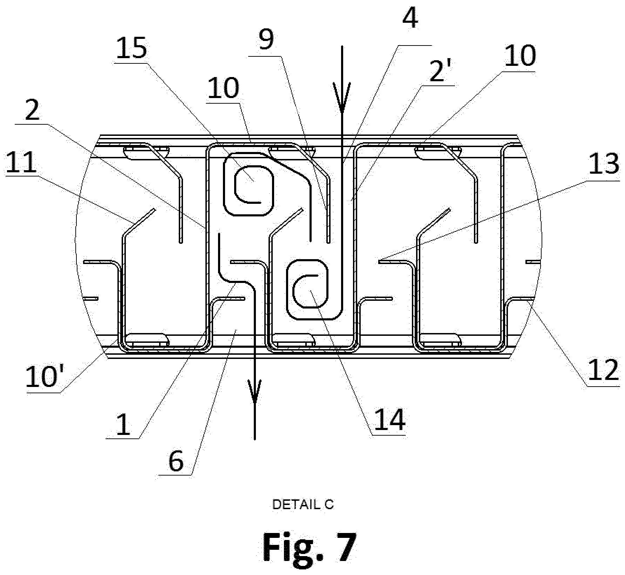

In one embodiment presented in Figs. 6 and 7, not forming part of the present invention, the kitchen hood filter is made entirely of stainless steel, which allows to wash and disinfect it with chemical agents. In this embodiment, the individual profiles 10, 10' are arranged in a row, formed by overlapping, one after the other, shaped profiles of different shapes. As shown in Fig. 7, one longer profile 10 is an element resembling a rotated "S" letter, which first arm 9 forms one side of an intake slotted air duct 4, and the inner surface of the opposite second arm 11 of the element resembling a rotated "S" letter inclined to the vertical at a 45° angle towards the inner surface of the first arm 9, which is situated below and distanced from the inner surface of the first arm 9 of the other profile 10, forming the first circulation chamber 14. Inside this chamber, the air inflow is subjected to centrifugal force so that each particle is set in a rotational motion. The heavier particles suspended in the air stream, deposit on the chamber walls. A clearance formed between the end of the arm 11 and the inner surface of the arm 9 directs the flow from the first circulation chamber 14 to the second circulation chamber 15. The clearance is 5 mm wide. The second circulation chamber 15 is formed of the outer surface of the second arm 11 of the element resembling a rotated "S" letter, the middle surface 2 and the upper surface of the profile 10 resembling a rotated "S" letter, and is limited from below by the bent end 13 of the second shorter profile 10' having a shape resembling "U" letter with the arms having different lengths and outwardly bent ends. Due to different heights of the arms of the second shorter profile 10', bent ends 12, 13 of two adjacent shorter profiles 10' form an elongated indirect labyrinthine slotted air outlet duct 1. In this preferable embodiment, bent ends 12, 13 of two adjacent shorter profiles 10' are bent at a 90° angle. In other embodiments, bent ends 12, 13 can be arranged at a different angle. In another embodiment, the ends are arranged at a slant and are parallel to each other.

In order to brace and strengthen the construction of the kitchen hood filter, profile 10' resembling a "U" letter is connected to the outer surface of profile 10 that resembles a rotated "S" letter "S". The profiles arranged in a line are embedded inside the housing.

In a different embodiment according to the present invention, the kitchen hood filter is made out of a series of longitudinal chambers with a quadrilateral profile and a meandering air flow, with mounted handles 8 facing in opposite directions. Each of the chambers has an intake slotted duct 4 formed between a side wall 2' and the side surface of the blade 9 parallel to it. The blade 9 is a longitudinal slat, which is angled at an intake opening 7 of the intake slotted duct 4, expanding the said opening 7. Opposite to the intake slotted duct 4, in each chamber, there is an outlet slotted duct 1 formed between a side wall 2 and the side surface of a blade 3 parallel to it. The blade 3 is a slanted T-bar inclining towards an outlet opening 6 of the slotted duct 1 and towards an angularly bent offset slat 5 located in the side wall 2. The slant of the T-bar ranges from 65° to 130° and is consistent with the angular bend of the offset slat 5. In this embodiment, due to the differences in bending of the arms of the individual profiles, they are denoted with different reference numbers.

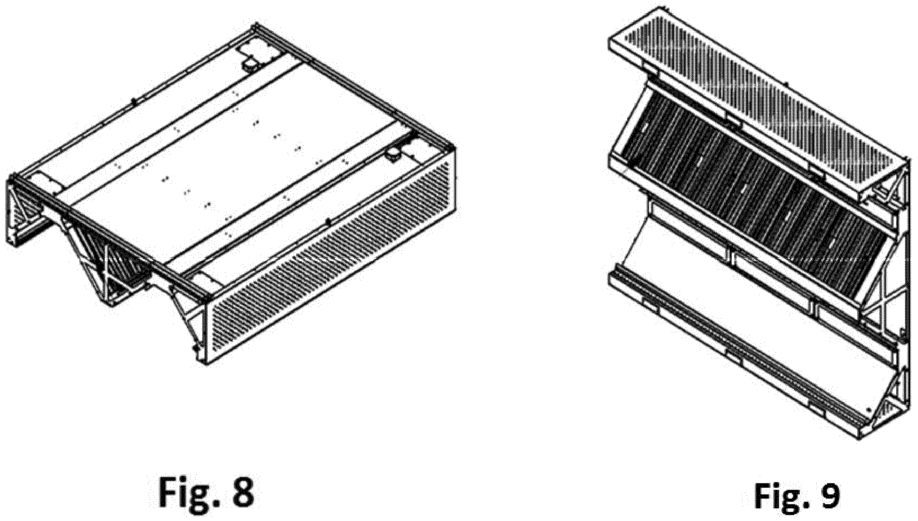

As shown in Figs. 8 and 9, the kitchen hood filter is used in professional kitchen hoods.

Different sizes of both embodiments of the invention may be available on the market depending on the size and purpose of the kitchen hood. Preferably, the sizes of the filters are 400 mm x 330 mm, 500 mm x 500 mm and their height is 50 mm. The filters are used in hoods where they are arranged in a line one after another, thus creating a surface filtering the air. The filters according to the invention can be placed in a hood mounted centrally in a kitchen and can be placed in a wall hood in such room. In both cases, the present solution meets filtration requirements for restaurant kitchens by purifying the air from grease particles whirling in the room.

The solutions developed by the Applicant meet the strict requirements for the equipment used in professional food catering and restaurants. They provide a high degree of filtration, high-efficiency of over 95% and fire resistance that blocks the passage of a flame through the filter. Under extreme conditions, thanks to its construction, the filter will prevent fire from penetrating into the ventilation system in the building.

Filters reduce grease build-up on the walls of ventilation ducts. The grease deposited in ventilation ducts may be a cause of fire. Cleaning the ducts is time-consuming and labour-intensive. Highly efficient filters allow to use heat exchangers in ventilation systems. However, heat exchangers are very sensitive to polluted air, they get unclean, and therefore their efficiency drops quickly. Using efficient filters allows to install a filtering system based on UV lamps (UV-C) in hoods. UV-C light filtration purifies the air from kitchen odours and fumes. Air being filtered with UV-C light should be purified from of at least 95% of residues. Due to the high-efficiency of the filtration, there is no need for repeated cleaning of the UV filtration system and ventilation ducts.

## Claims

1. A kitchen hood filter, with a series of longitudinal chambers with a quadrilateral profile, and with a meandering air flow, with mounted handles (8) facing in opposite directions, wherein each chamber has an intake slotted duct (4) formed between the outer surface of the side wall (2') of one longer profile having a shape resembling a rotated "S" letter and the parallel to it outer side surface of the first arm (9) of another longer profile having a shape resembling a rotated "S" letter, with individual profiles are arranged in rows formed of overlapping, successive profiles, wherein the first arm (9) of the longer profile having a shape resembling a rotated "S" letter is a longitudinal slat which is angularly bent at the intake opening (7) of the intake slotted duct (4), thereby expanding the intake opening (7) on the side of the housing surface, and wherein in each chamber, opposite to the intake slotted duct (4), an outlet slotted duct (1) is formed between the inside side wall (2) of another longer profile having a shape resembling a rotated "S" letter and a parallel to it outer side surface of the second arm (3) of one longer profile having a shape resembling a rotated "S" letter, **characterized in that** the second arm (3) of one longer profile having a shape resembling a rotated "S", together with a shorter profile having a shape resembling "U" letter connected to the longer profile, forms a slanted T-bar, one of the arms of the slanted T-bar is inclined towards the opening (6) of the outlet slotted duct (1) and towards the angularly bent offset first arm (5) of the shorter profile having a shape resembling "U" letter, bent away from the side wall (2) of adjacent another longer profile having a shape resembling a rotated "S" letter, wherein the other shorter profile having a shape resembling "U" letter has varying heights of the arms, which bent ends of the two adjacent other shorter profiles having a shape resembling "U" letter form an elongated intermediate labyrinthine outlet slotted duct of air outlet.

2. The filter according to claim 1, **characterized in that** the slant of the T-bar ranges from 65° to 130° and it corresponds to the angularly bent offset arm (5) of the shorter profile having a shape resembling "U" letter.

3. Use of a filter according to any of claims 1 or 2 in professional kitchen hoods.

## Patentansprüche

1. Ein Filter für eine Dunstabzugshaube, mit einer Reihe von Längskammern mit vierseitigem Profil und mit mäanderförmigem Luftstrom, mit entgegengesetzt ausgerichteten Griffen (8), wobei jede Kammer einen schlitzförmigen Ansaugkanal (4) aufweist, der zwischen der Außenfläche der Seitenwand (2') eines der längeren Profile, dessen Form einem gedrehten Buchstaben "S" ähnelt, und der dazu parallelen äußeren Seitenfläche des ersten Arms (9) des anderen längeren Profils, das der Form eines gedrehten "S"-Buchstabens ähnelt, gebildet ist, wobei die einzelnen Profile in Reihen angeordnet sind, die aus überlappenden, aufeinanderfolgenden Profilen gebildet sind, wobei der erste Arm (9) des längeren Profils, das die Form eines gedrehten "S"-Buchstabens aufweist, eine Längslamelle ist, die an der Einlassöffnung (7) des schlitzförmigen Ansaugkanals (4) winklig gebogen ist, wodurch die Einlassöffnung (7) auf der Seite der Gehäuseoberfläche erweitert wird, und wobei in jeder Kammer, gegenüber dem schlitzförmigen Ansaugkanal (4), ein schlitzförmiger Auslasskanal (1) zwischen der inneren Seitenwand (2) eines weiteren längeren Profils, das die Form eines gedrehten "S"-Buchstabens aufweist, und einer dazu parallelen äußeren Seitenfläche des zweiten Arms (3) eines längeren Profils mit einer Form, die einem gedrehten "S" -Buchstaben ähnelt, gebildet wird, **dadurch gekennzeichnet, dass** der zweite Arm (3) eines längeren Profils mit einer Form, die einem gedrehten "S" ähnelt, zusammen mit einem kürzeren Profil mit einer Form, die dem Buchstaben "U" ähnelt und mit dem längeren Profil verbunden ist, einen schrägen T-Balken bildet, wobei einer der Arme des schrägen T-Balkens zur Öffnung (6) des schlitzförmigen Auslasskanals (1) und zum winklig abgeneigten, versetzten ersten Arm (5) des kürzeren Profils mit einer dem Buchstaben "U" ähnlichen Form geneigt ist, und von der Seitenwand (2) eines benachbarten weiteren längeren Profils mit einer Form, die einem gedrehten "S" ähnelt, weggebogen ist, wobei das andere kürzere Profil mit einer Form, die dem Buchstaben "U" ähnelt, unterschiedliche Höhen der Arme aufweist, wobei die gebogenen Enden der beiden benachbarten weiteren kürzeren Profile mit einer Form, die dem Buchstaben "U" ähnelt, einen länglichen, labyrinthartigen schlitzförmigen Zwischenauslasskanal für den Luftaustritt bilden.

2. Filter nach Anspruch 1, **dadurch gekennzeichnet, dass** die Neigung des T-Balkens im Bereich von 65° bis 130° liegt und dem winklig gebogenen, versetzten Arm (5) des kürzeren Profils entspricht, dessen Form dem Buchstaben "U" ähnelt.

3. Verwendung eines Filters nach einem der Ansprüche 1 oder 2 in professionellen Küchenhauben.

## Revendications

1. Filtre pour hotte de cuisine, comportant une série de chambres longitudinales de profil quadrilatéral et présentant un écoulement d'air sinueux, muni de poignées (8) orientées dans des directions opposées, dans lequel chaque chambre comporte un conduit à fentes d'admission (4) formé entre la surface extérieure de la paroi latérale (2') d'un premier profilé allongé dont la forme rappelle celle d'un « S » tourné et la surface latérale extérieure, parallèle à celle-ci, du premier bras (9) d'un autre profilé allongé dont la forme rappelle celle d'un « S » tourné, dans lequel des profilés individuels sont disposés en rangées formées de profilés successifs qui se chevauchent, le premier bras (9) du profilé allongé, dont la forme rappelle celle d'un « S » tourné, étant une lamelle longitudinale pliée en angle au niveau de l'ouverture d'admission (7) du conduit à fentes d'admission (4), ce qui élargit l'ouverture d'admission (7) du côté de la surface du boîtier, dans lequel, dans chaque chambre, à l'opposé du conduit à fentes d'admission (4), un conduit à fentes de sortie (1) est formé entre la paroi latérale intérieure (2) d'un autre profilé allongé, dont la forme rappelle celle d'un « S » tourné et la surface latérale extérieure, parallèle à celle-ci, du deuxième bras (3) d'un profilé allongé dont la forme rappelle celle d'un « S » tourné,
**caractérisé en ce que** le deuxième bras (3) d'un profilé allongé dont la forme rappelle celle d'un « S » tourné, associé à un profilé plus court dont la forme rappelle celle de la lettre « U » et qui est relié au profilé allongé, forme une barre en T inclinée, l'un des bras de la barre en T inclinée est incliné vers l'ouverture (6) du conduit à fentes de sortie (1) et vers le premier bras (5) coudé et décalé du profilé plus court, dont la forme ressemble à la lettre « U », ce bras étant coudé à l'opposé de la paroi latérale (2) d'un autre profilé plus long adjacent, dont la forme ressemble à un « S » tourné, dans lequel l'autre des deux profilés courts, dont la forme ressemble à la lettre « U », présente des bras de hauteurs variables, et où les extrémités coudées des deux autres profilés courts adjacents, dont la forme ressemble à la lettre « U », forment un conduit de sortie d'air intermédiaire allongé, en forme de labyrinthe et muni de fentes.

2. Filtre selon la revendication 1, **caractérisé en ce que** l'inclinaison de la barre en T est comprise entre 65° et 130° et qu'elle correspond au bras coudé (5) du profilé le plus court, dont la forme rappelle celle de la lettre « U ».

3. Utilisation d'un filtre selon l'une des revendications 1 ou 2 dans les hottes de cuisine professionnelles.
